# EUROPEAN PATENT APPLICATION

(11) **EP 2 698 974 A1**
(43) Date of publication of application: **19.02.2014**
(21) Application number: 13175295.8
(22) Date of filing: 05.07.2013
(51) Int. Cl.: H04M 3/436

(54) **Method for handling call receiving and an electronic device thereof**

(30) Priority: 16.08.2012 KR 20120089707
(71) Applicant: Samsung Electronics Co., Ltd, Gyeonggi-do 443-742 (KR)
(72) Inventor: Kim, Chang-Young, Gyeonggi-do, (KR)
(74) Representative: Birchenough, Lewis

(57) **Abstract**

A call is received at a called electronic device. A rejection message is selected and transmitted to the calling party. After a period of time from transmission, the call rejection information comprising the call information and the rejection message is displayed to the called party.

## Description

### TECHNICAL FIELD OF THE INVENTION

The present disclosure relates to a method for handling a reception call in an electronic device, and the electronic device thereof.

### BACKGROUND OF THE INVENTION

Electronic devices have become necessities of modern life due to ease of portability, and are under development into multimedia devices for providing various services such as voice and video call functions, information input and output functions, and data storage functions.

A user of an electronic device may transmit a call rejection message to a call sender when an immediate response cannot be made for a call received during the use of the electronic device (i.e., during driving a car, meeting, a call, or a conversation). Accordingly, by using the call rejection message received from the user of the electronic device, the call sender can recognize that the user of the electronic device is not capable of answering the call.

However, the electronic device does not have a function for reporting reception-rejected call information after the call rejection message is transmitted. Accordingly, the user cannot easily recognize that the received call is rejected.

### SUMMARY OF THE INVENTION

To address the above-discussed deficiencies of the prior art, it is a primary object to provide an apparatus and method for handling a reception call in an electronic device.

Another aspect of the present disclosure is to provide an apparatus and method for displaying reception-rejected call information in an electronic device.

Another aspect of the present disclosure is to provide an apparatus and method for periodically displaying reception-rejected call information in an electronic device.

Another aspect of the present disclosure is to provide an apparatus and method for connecting a call by using reception-rejected call information in an electronic device.

Another aspect of the present disclosure is to provide an apparatus and method for displaying reception-rejected call information and a call rejection message in an electronic device.

Another aspect of the present disclosure is to provide an apparatus and method for periodically displaying reception-rejected call information and a call rejection message in an electronic device.

Another aspect of the present disclosure is to provide an apparatus and method for connecting a call by using reception-rejected call information and a call rejection message in an electronic device.

In accordance with a first aspect of the present disclosure, a method of handling a reception call in an electronic device is provided. The method includes transmitting a rejection message for call reception, and displaying call rejection information for the call reception. The call rejection information includes at least one of reception-rejected call information and the rejection message.

In the aforementioned aspect of the present disclosure, the displaying of the call rejection information may include, after transmitting the rejection message for the call reception, determining whether a period for displaying the call rejection information arrives, and at the arrival of the period for displaying the call rejection information, displaying the call rejection information.

In accordance with a second aspect of the present disclosure, an electronic device includes at least one processor, a memory, and at least one program stored in the memory and configured to be executable by the at least one processor. The program includes at least one instruction for transmitting a rejection message for call reception and displaying call rejection information for the call reception, and wherein the call rejection information includes at least one of reception-rejected call information and the rejection message.

In the aforementioned aspect of the present disclosure, the instruction for displaying the call rejection information may include an instruction for confirming whether a period for displaying the call rejection information arrives after transmitting the rejection message for the call reception, and at the arrival of the period for displaying the call rejection information, displaying the call rejection information.

Preferably, the device is at least one processor; a memory; and at least one program stored in the memory and configured to be executable by the at least one processor, wherein the program comprises at least one instruction for transmitting a rejection message for call reception and displaying call rejection information for the call reception, and wherein the call rejection information comprises at least one of reception-rejected call information and the rejection message.

Preferably, the device is wherein the program further comprises an instruction for receiving a call, displaying information on the call reception, and confirming whether the call reception is rejected, wherein if it is confirmed that the call reception is rejected, a rejection message for the received call is transmitted.

Preferably, the device is wherein the instruction for transmitting the rejection message comprises an instruction for confirming the rejection message, and transmitting the rejection message to a call sender.

Preferably, the device is wherein the instruction for transmitting the rejection message comprises an instruction for displaying a plurality of rejection messages, and if any one of the plurality of rejection messages is selected, transmitting the selected rejection message to a call sender.

Preferably, the device is wherein the instruction for displaying the call rejection information comprises an instruction for confirming whether a period for displaying the call rejection information arrives after transmitting the rejection message for the call reception, and at the arrival of the period for displaying the call rejection information, displaying the call rejection information.

Preferably, the device is wherein the instruction for displaying the call rejection information comprises an instruction for determining whether the call to a first recipient is finished during a call to the first recipient, and if the call to the first recipient is finished, displaying the call rejection information.

Preferably, the device is wherein the program further comprises an instruction for, after transmitting the rejection message for the call reception, releasing the display of the call rejection information if a reference time elapses, and at the arrival of a period for displaying the call rejection information, displaying the call rejection information.

Preferably, the device is wherein the program further comprises an instruction for, after transmitting the rejection message for the call reception, generating at least one of vibration and sound to report the call rejection information.

Preferably, the device is wherein the call rejection information further comprises a call connection icon.

Preferably, the device is confirming a call sender included in the call rejection information, and performing call connection to the call sender.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 is a block diagram of an electronic device according to an embodiment of the present disclosure;

FIG. 2 is a block diagram of a processor according to an embodiment of the present disclosure;

FIG. 3A is a flowchart illustrating a process for displaying call rejection information in an electronic device according to an embodiment of the present disclosure;

FIG. 3B illustrates a structure of an electronic device for displaying call rejection information according to an embodiment of the present disclosure;

FIG. 4 is a flowchart illustrating a process for displaying call rejection information in an electronic device in an idle state according to an embodiment of the present disclosure;

FIG. 5 is a flowchart illustrating a process for displaying call rejection information in an electronic device during a call according to an embodiment of the present disclosure;

FIG. 6 is a flowchart illustrating a process for periodically displaying call rejection information in an electronic device in an idle state according to an embodiment of the present disclosure;

FIG. 7 is a flowchart illustrating a process for periodically displaying call rejection information in an electronic device during a call according to an embodiment of the present disclosure;

FIG. 8 is a flowchart illustrating a process for performing an event by using call rejection information in an electronic device according to an embodiment of the present disclosure; and

FIG. 9A to FIG. 9E illustrate a screen configuration of an electronic device for displaying call rejection information in an electronic device according to an embodiment of the present disclosure.

### DETAILED DESCRIPTION OF THE INVENTION

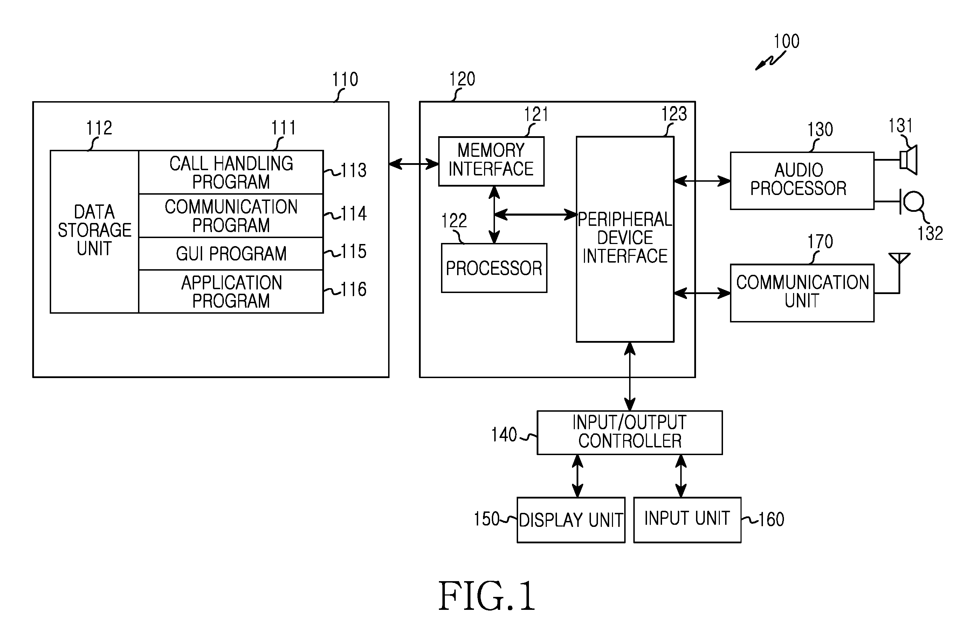

FIGURES 1 through 9E, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. Exemplary embodiments of the present disclosure will be described herein below with reference to the accompanying drawings. In the following description, well-known functions or constructions are not described in detail since they would obscure the disclosure in unnecessary detail. Also, the terms used herein are defined according to the functions of the present disclosure. Thus, the terms may vary depending on the user's or operator's intension and usage. That is, the terms used herein are to be understood based on the descriptions made herein. Further, like reference numerals denote parts performing similar functions and actions throughout the drawings.

The present disclosure described hereinafter relates to a technique for displaying call rejection information in an electronic device. Herein, the call rejection information includes at least one of reception-rejected call information and a rejection message.

An electronic device described hereinafter includes a mobile communication terminal capable of providing a call service, a Personal Digital Assistant (PDA), a laptop, a smart phone, a netbook, a television set, a Mobile Internet Device (MID), a Ultra Mobile Personal Computer (UMPC), a tablet PC, a navigator, an Motion Picture Experts Group Layer 3 (MP3) player, and the like.

FIG. 1 is a block diagram of an electronic device according to an embodiment of the present disclosure.

Referring to FIG. 1, an electronic device 100 includes a memory 110, a processor unit 120, an audio processor 130, an input/output controller 140, a display unit 150, an input unit 160, and a communication unit 170. Herein, the memory 110 may be plural in number.

Each component will be described below in detail.

The memory 110 includes a program storage unit 111 for storing a program for controlling an operation of the electronic device 100 and a data storage unit 112 for storing data generated during the program is executed. For example, the program storage unit 111 includes a call handling program 113, a communication program 114, a Graphic User Interface (GUI) program 115, and at least one application program 116. Herein, the program included in the program storage unit 111 is a group of instructions, and may be expressed as an instruction set.

The call handling program 113 includes at least one software component for processing a reception call. For example, if the call reception is sensed by the communication program 114, the call handling program 113 confirms information of the received call. If a call rejection message is received, the rejection message is transmitted to a call sender under the control of the call handling program 113. In this case, the call handling program 113 provides control to display the call rejection information. In addition, the call handling program 113 may provide control to periodically display the call rejection information. If the call reception is sensed by the communication program 114, the call handling program 113 may determine to connect to the received call.

The communication program 114 includes at least one software component for performing voice communication and data communication via the communication unit 170. For example, the communication program 114 controls a call received via the communication unit 170. If the rejection message is selected by the call handling program 113, the call rejection message may be transmitted via the communication unit 170 under the control of the communication program 114. If a call connection is determined by the call handling program 113, the communication program 114 may control the call connection to the call sender.

The GUI program 115 includes at least one software component for providing a graphic user interface on the display unit 150. For one example, the GUI program 115 provides control to display call rejection information determined by the call handling program 113. For another example, the GUI program 115 may provide control to display a missed call icon and a call rejection icon.

The application program 116 includes a software component for at least one application installed in the electronic device 100.

The processor unit 120 includes a memory interface 121, at least one processor 122, and a peripheral device interface 123. Herein, the memory interface 121, the at least one processor 122, and the peripheral device interface 123 included in the processor unit 120 may be integrated as at least one integrated circuit or may be implemented as separate components.

The memory interface 121 controls an access to the memory 110 for a component such as the processor 122 or the peripheral device interface 123.

The peripheral device interface 123 controls a connection between an input/output peripheral device of the electronic device 100 and the processor 122 and the memory interface 121.

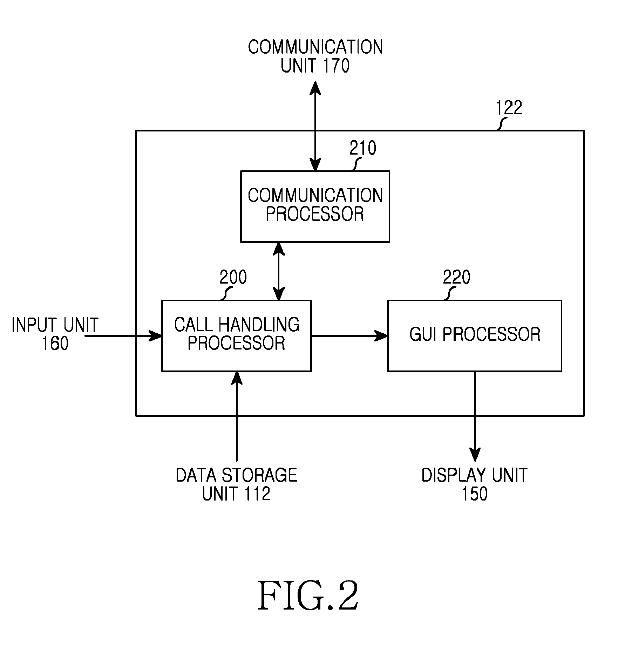

The processor 122 controls the electronic device 100 to provide various multimedia services by using at least one software program. In this case, the processor 122 executes at least one program stored in the memory 110 to provide a service according to the program. For example, the processor 122 can be configured as illustrated in FIG. 2 to display call rejection information by executing the call handling program 113.

The audio processor 130 provides an audio interface between the user and the electronic device 100 via a speaker 131 and a microphone 132.

The input/output controller 140 provides an interface between the peripheral device interface 123 and an input/output device such as the display unit 150 and the input unit 160.

The display unit 150 displays status information of the electronic device 100, a character input by the user, a moving picture, a still picture, and the like. For one example, the display unit 150 displays the call rejection information under the control of the GUI program 115. For another example, the display unit 150 may display the missed call icon and the call rejection icon under the control of the GUI program 115.

If the display unit 150 includes a touch screen, the display unit 150 may further include a touch input unit for providing information on a touch sensed by using the touch panel to the processor unit 120 via the input/output controller 140.

The input unit 160 provides input data generated by a user's selection to the processor unit 120 via the input/output controller 140. For example, the input unit 160 may include control buttons for the control of the electronic device 100. For another example, the input unit 160 may include a key pad for receiving data input from the user.

The communication unit 170 includes at least one software component for performing a communication function for voice communication and data communication. For example, the communication unit 170 provides call information to the communication program 114 upon sensing of the call reception. For another example, the communication unit 170 may transmit the call rejection message under the control of the communication program 114. In this case, the communication unit may be divided into a plurality of communication sub-modules for supporting different communication networks. For example, although not limited thereto, the communication network may include one or more of a Global System for Mobile Communication (GSM) network, an Enhanced Data GSM Environment (EDGE) network, a Code Division Multiple Access (CDMA) network, a W-Code Division Multiple Access (W-CDMA) network, a Long Term Evolution (LTE) network, an Orthogonal Frequency Division Multiple Access (OFDMA) network, a Wireless Local Area Network (WLAN), a Bluetooth network, Near Field Communication (NFC), and the like.

FIG. 2 is a block diagram of a processor according to an embodiment of the present disclosure.

Referring to FIG. 2, the processor 122 includes a call handling processor 200, a communication processor 210, and a GUI processor 220.

The call handling processor 200 handles a call by executing the call handling program 113 of the program storage unit 111. For example, upon sensing call reception by the communication processor 210, the call handling processor 200 confirms information of the received call. If a call rejection message is selected, the call handling processor 200 provides control to transmit a rejection message to a call sender. In this case, the control of the call handling processor 200 provides control to display call rejection information. In addition, the call handling processor 200 provides control to periodically display the call rejection information. Upon sensing call reception by the communication processor 210, the call handling processor 200 may determine to connect to the received call.

The communication processor 210 executes the communication program 114 stored in the program storage unit 111 to perform voice communication and data communication via the communication unit 170. For example, the communication processor 210 controls a call received via the communication unit 170. If a rejection message is selected by the call handling processor 200, the communication processor 210 can control the communication unit 170 to transmit a call rejection message. If a call connection is determined by the call handling processor 200, the communication processor 210 may control the call connection to the call sender.

The GUI processor 220 executes the GUI program 115 of the program storage unit 111 to provide a graphic user interface on the display unit 150. For example, the GUI processor 220 provides control to display call rejection information determined by the call handling processor 200. For another example, the GUI processor 220 may provide control to display a missed call icon and a call rejection icon.

In the electronic device of the aforementioned embodiment, the call handling processor 200 is controlled to execute the call handling program 113 to display the call rejection information.

In another embodiment, the electronic device may include another call handling unit including the call handling program 113.

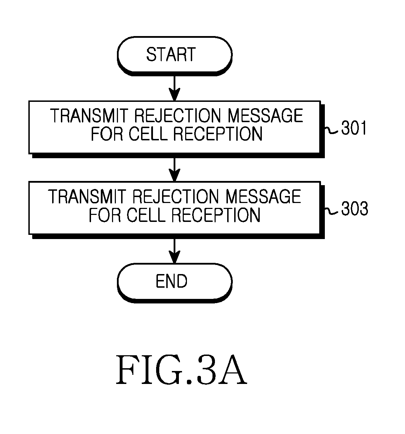

FIG. 3A is a flowchart illustrating a process for displaying call rejection information in an electronic device according to an embodiment of the present disclosure.

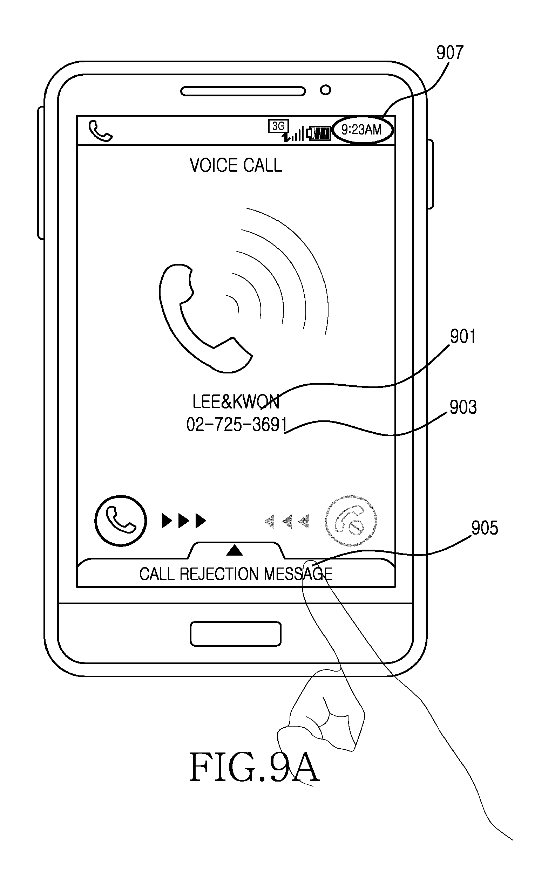

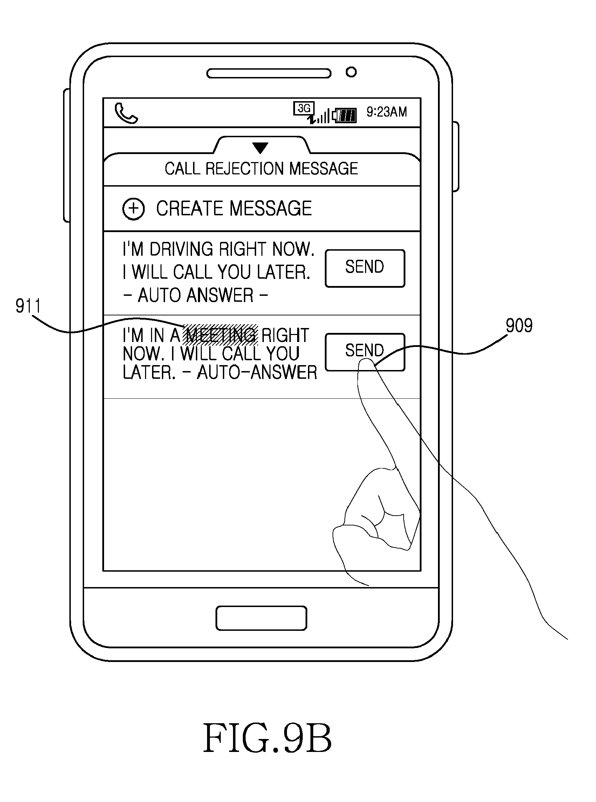

Referring to FIG. 3A, the electronic device transmits a rejection message for cell reception in operation 301. For example, upon sensing of the call reception, the electronic device displays a call reception screen including a sender's name 901 and a sender's phone number 903 on the display unit 150 as illustrated in FIG. 9A. If it is sensed that a call rejection message menu 905 is selected in the call reception screen by a user's manipulation, the electronic device displays a call rejection message list as illustrated in FIG. 9B.

As illustrated in FIG. 9B, if a message 911 saying "I'm in a meeting right now. I will call you later." is selected by the user, the electronic device transmits the message 911 saying "I'm in a meeting right now. I will call you later." to a phone number included in the received call information (see 909). In this case, the electronic device ends the call reception. In addition, if the call rejection message menu is selected, the electronic device may transmit a pre-set rejection message.

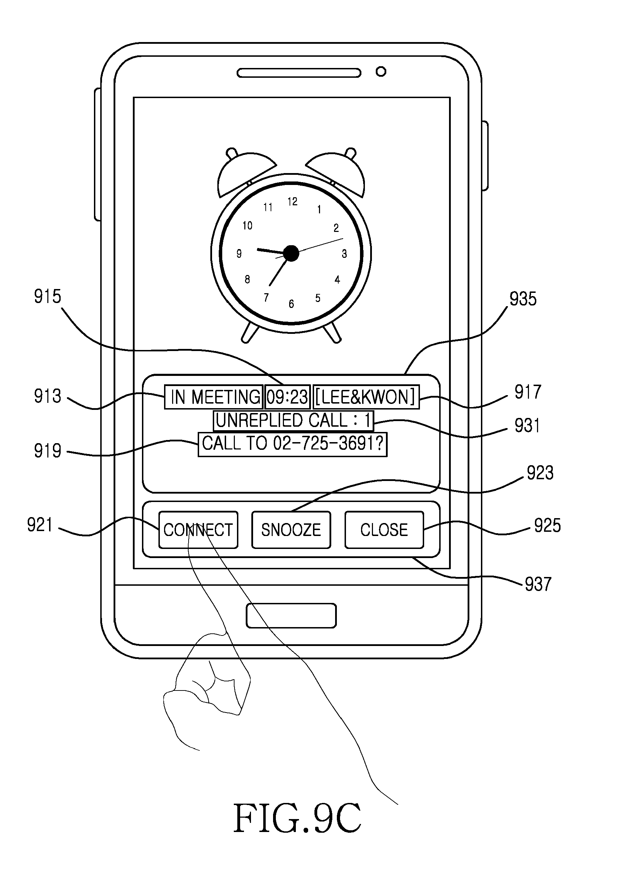

After transmitting the call rejection message, proceeding to operation 303, the electronic device displays call rejection information on the display unit 150. For example, as illustrated in FIG. 9C, the electronic device displays call rejection information 935 on the display unit 150. The call rejection information 935 includes a part 913 of the call rejection message transmitted to a call sender, a call rejection message transmission time 915, a call sender's name 917, a call sender's phone number 919, and a call reception count 931. In addition, as illustrated in FIG. 9C, the electronic device may display a connection control menu 937 including a "connection" menu 921 for attempting a call connection to the call sender's phone number 919, a "snooze" menu 923 for displaying the call rejection information again after a reference time elapses, and a "close" menu 925 for releasing the display of the call rejection information. In this case, the electronic device may generate vibration and sound while displaying the call rejection information on the display unit 150.

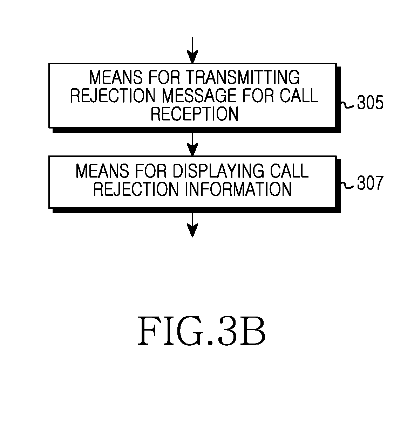

Thereafter, the procedure of FIG. 3 ends.

As described above, the electronic device transmits the rejection message for the received call. In this case, the rejection message is configured either in a text form or in a voice form. For example, if the rejection message is configured in the text form, the electronic device transmits the rejection message to the call sender by using a short message service.

For another example, if the rejection message is configured in voice form, the electronic device may temporarily connect a call to the call sender to transmit a voice message for the rejection. When transmission of the voice message is complete, the call connection to the call sender is finished.

For another example, if the rejection message is configured in voice form, the electronic device may transmit a voice message for the rejection through an additional control channel in addition to the call connection.

For another example, the electronic device may transmit index information for rejection message transmission to an additional server. In this case, the rejection message configured with at least one of a voice or a text corresponding to the index information is transmitted to the call sender.

As described above, each of the operations for displaying the call rejection information in the electronic device may be configured by using a means for displaying the call rejection information in the electronic device as illustrated in FIG. 3B.

FIG. 3B illustrates a structure of an electronic device for displaying call rejection information according to an embodiment of the present disclosure.

Referring to FIG. 3B, the electronic device includes a first means 305 for transmitting a rejection message for call reception and a second means 307 for displaying call rejection information.

The first means 305 transmits a rejection message for call reception. For example, upon sensing of the call reception, the electronic device displays a call reception screen including a sender's name 901 and a sender's phone number 903 on the display unit 150 as illustrated in FIG. 9A. If it is sensed that a call rejection message menu 905 is selected in the call reception screen by a user's manipulation, the electronic device displays a call rejection message list as illustrated in FIG. 9B.

As illustrated in FIG. 9B, if a message 911 saying "I'm in a meeting right now. I will call you later." is selected by the user, the electronic device transmits the message 911 saying "I'm in a meeting right now. I will call you later." to a phone number included in the received call information (see 909). In this case, the electronic device ends the call reception. In addition, if the call rejection message menu is selected, the electronic device may transmit a pre-set rejection message.

The second means 307 displays call rejection information on the display unit 150. For example, as illustrated in FIG. 9C, the electronic device displays call rejection information 935 on the display unit 150. The call rejection information 935 includes a part 913 of the call rejection message transmitted to a call sender, a call rejection message transmission time 915, a call sender's name 917, a call sender's phone number 919, and a call reception count 931. In addition, as illustrated in FIG. 9C, the electronic device may display a connection control menu 937 including a "connection" menu 921 for attempting a call connection to the call sender's phone number 919, a "snooze" menu 923 for displaying the call rejection information again after a reference time elapses, and a "close" menu 925 for releasing the display of the call rejection information. In this case, the electronic device may generate vibration and sound while displaying the call rejection information on the display unit 150.

As described above, the electronic device transmits the rejection message for the received call. In this case, the rejection message is configured either in a text form or in a voice form. For example, if the rejection message is configured in the text form, the electronic device transmits the rejection message to the call sender by using a short message service.

For another example, if the rejection message is configured in voice form, the electronic device may temporarily connect a call to the call sender to transmit a voice message for the rejection. When transmission of the voice message is complete, the call connection to the call sender is finished.

For another example, if the rejection message is configured in voice form, the electronic device may transmit a voice message for the rejection through an additional control channel in addition to the call connection.

For another example, the electronic device may transmit index information for rejection message transmission to an additional server. In this case, the rejection message configured with at least one of a voice or a text corresponding to the index information is transmitted to the call sender.

As described above, the electronic device includes various means for displaying the call rejection information. In an embodiment, the various means for displaying the call rejection information in the electronic device may be configured as one means.

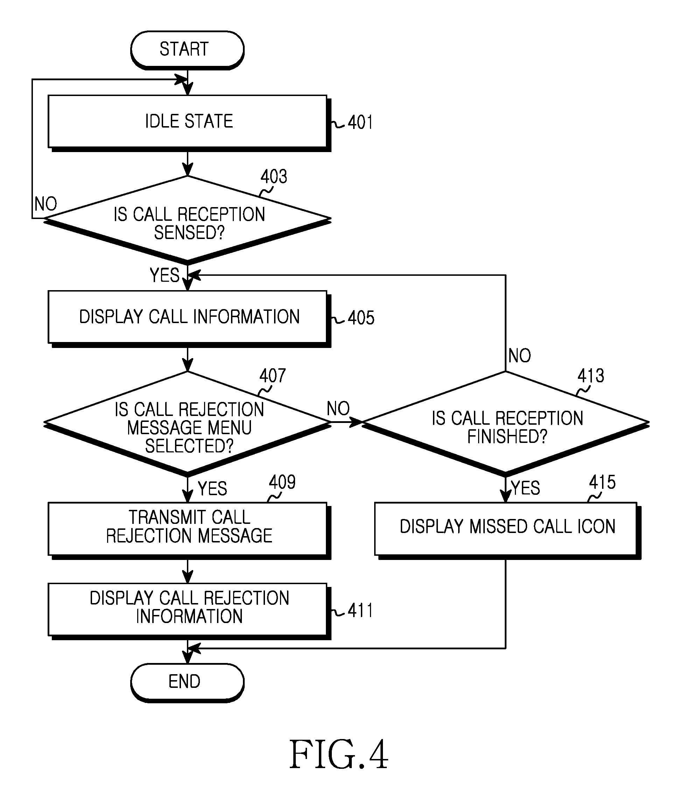

FIG. 4 is a flowchart illustrating a process for displaying call rejection information in an electronic device in an idle state according to an embodiment of the present disclosure.

Referring to FIG. 4, the electronic device is in an idle state in operation 401, and determines whether call reception is sensed via the communication unit 170 in operation 403.

Upon sensing the call reception, proceeding to operation 405, the electronic device displays information on the reception-sensed call on the display unit 150. For example, the electronic device displays a sender's name 901 and a sender's phone number 903 on the display unit 150 as illustrated in FIG. 9A. If a phone number of the reception-sensed call is not stored in a phonebook, the electronic device may display only the phone number and not the name.

After displaying information on the call on the display unit 150, proceeding to operation 407, the electronic device determines whether a call rejection message menu is selected. For example, as illustrated in FIG. 9A, the electronic device determines whether a call rejection message menu 905 is selected by a user's manipulation in a screen which displays the reception-sensed call. Herein, when a user of the electronic device cannot immediately respond to the reception-sensed call, the call rejection message indicates a means capable of reporting to the call sender that the call cannot be immediately responded.

If the call rejection message menu is selected, proceeding to operation 409, the electronic device transmits any one message selected by the user from the call rejection messages. For example, as illustrated in FIG. 9B, if a message 911 saying "I'm in a meeting right now. I will call you later." is selected by the user, the electronic device transmits the message 911 saying "I'm in a meeting right now. I will call you later." to a phone number included in the received call information (see 909). In this case, the electronic device ends the call reception. In addition, if the call rejection message menu is selected, the electronic device may transmit a pre-set rejection message.

After transmitting the call rejection message, proceeding to operation 411, the electronic device displays the call rejection information on the display unit 150. For example, as illustrated in FIG. 9C, the electronic device displays call rejection information 935 on the display unit 150. The call rejection information 935 includes a part 913 of the call rejection message transmitted to a call sender, a call rejection message transmission time 915, a call sender's name 917, a call sender's phone number 919, and a call reception count 931. In addition, as illustrated in FIG. 9C, the electronic device may display a connection control menu 937 including a "connection" menu 921 for attempting a call connection to the call sender's phone number 919, a "snooze" menu 923 for displaying the call rejection information again after a reference time elapses, and a "close" menu 925 for releasing the display of the call rejection information. In an embodiment, the electronic device may generate vibration and sound while displaying the call rejection information on the display unit 150.

If the call rejection message menu is not selected or if the call rejection message is not selected after the call rejection message menu is selected, proceeding to operation 413, the electronic device determines whether the call reception is finished.

If the call reception is not finished, returning to operation 405, the electronic device continues to display information on the received call on the display unit 150 as illustrated in FIG. 9A. If the call rejection message is not selected in a state in which the call rejection message menu is selected, the electronic device may continue to display the call rejection message selection screen as illustrated in FIG. 9B.

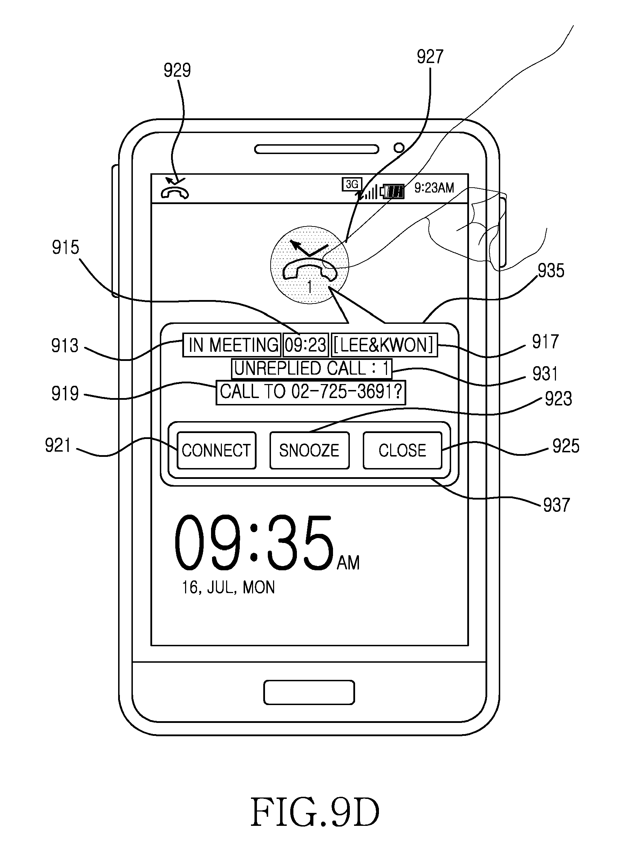

If the call reception is finished, proceeding to operation 415, the electronic device displays a missed call icon on the display unit 150. For example, the electronic device displays missed call icons 927 and 929 on the display unit 150 as illustrated in FIG. 9D. In this case, if it is sensed that the user selects the missed call icon 927 displayed on the display unit 150, as illustrated in FIG. 9D, the electronic device may display a cell reception end time 915, a call rejection message transmission time 915, a call sender's name 917, a connection control menu 937 including a "connection" menu 921 for attempting a call connection to the call sender's phone number 919, a "snooze" menu 923 for displaying the call rejection information again after a reference time elapses, and a "close" menu 925 for releasing the display of the call rejection information.

Thereafter, the procedure of FIG. 4 ends.

As described above, the electronic device transmits the rejection message for the received call. In this case, the rejection message is configured either in text form or in voice form. For example, if the rejection message is configured in text form, the electronic device transmits the rejection message to the call sender by using a short message service.

For another example, if the rejection message is configured in voice form, the electronic device may temporarily connect a call to the call sender to transmit a voice message for the rejection. When transmission of the voice message is complete, the call connection to the call sender is finished.

For another example, if the rejection message is configured in voice form, the electronic device may transmit a voice message for the rejection through an additional control channel in addition to the call connection.

For another example, the electronic device may transmit index information for rejection message transmission to an additional server. In this case, the rejection message configured with at least one of a voice or a text corresponding to the index information is transmitted to the call sender.

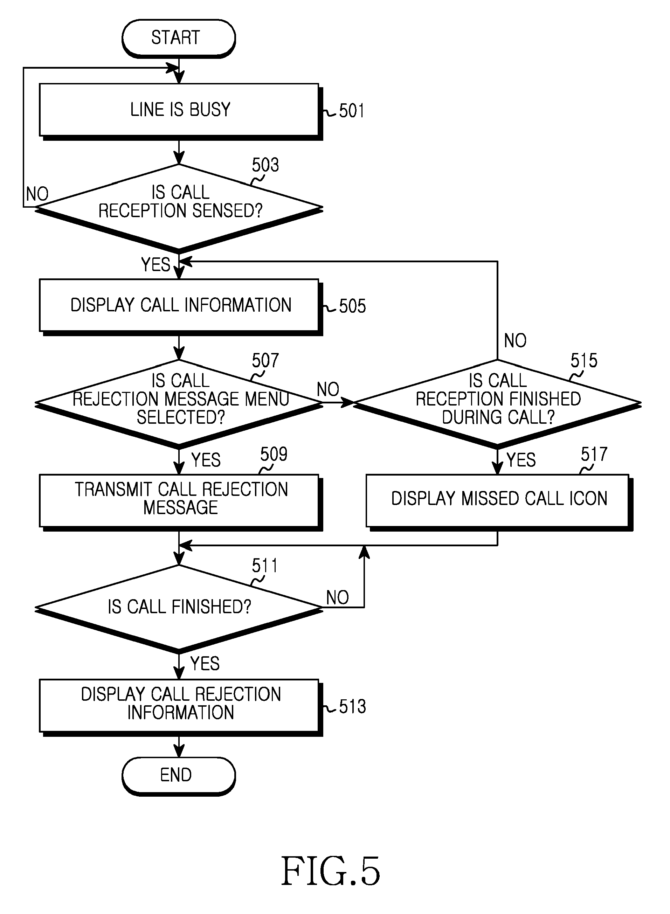

FIG. 5 is a flowchart illustrating a process for displaying call rejection information in an electronic device during a call according to an embodiment of the present disclosure.

Referring to FIG. 5, while the line is busy in operation 501, the electronic device determines whether cell reception is sensed in operation 503.

Upon sensing the call reception, proceeding to operation 505, the electronic device displays information on the reception-sensed call on the display unit 150. For example, the electronic device displays a sender's name 901 and a sender's phone number 903 on the display unit 150 as illustrated in FIG. 9A. If a phone number of the reception-sensed call is not stored in a phonebook, the electronic device may display only the phone number and not the name.

After displaying information on the call on the display unit 150, proceeding to operation 507, the electronic device determines whether a call rejection message menu is selected. For example, as illustrated in FIG. 9A, the electronic device determines whether the call rejection message menu 905 is selected by a user's manipulation in a screen which displays the reception-sensed call. Herein, when a user of the electronic device cannot immediately respond to the reception-sensed call, the call rejection message indicates a means capable of reporting to the call sender that the call cannot be immediately responded.

If the call rejection message menu is selected, proceeding to operation 509, the electronic device transmits any one message selected by the user from the call rejection messages. For example, as illustrated in FIG. 9B, if a message 911 saying "I'm in a meeting right now. I will call you later." is selected by the user, the electronic device transmits the message 911 saying "I'm in a meeting right now. I will call you later." to a phone number included in the received call information (see 909). In this case, the electronic device ends the call reception. In addition, if the call rejection message menu is selected, the electronic device may transmit a pre-set rejection message.

After transmitting the call rejection message, proceeding to operation 511, the electronic device determines whether the call is finished.

If the call is finished, proceeding to operation 513, the electronic device displays the call rejection information on the display unit 150. For example, as illustrated in FIG. 9C, the electronic device displays call rejection information 935 on the display unit 150. The call rejection information 935 includes a part 913 of the call rejection message transmitted to a call sender, a call rejection message transmission time 915, a call sender's name 917, a call sender's phone number 919, and a call reception count 931. In addition, as illustrated in FIG. 9C, the electronic device may display a connection control menu 937 including a "connection" menu 921 for attempting a call connection to the call sender's phone number 919, a "snooze" menu 923 for displaying the call rejection information again after a reference time elapses, and a "close" menu 925 for releasing the display of the call rejection information. In this case, the electronic device may generate vibration and sound while displaying the call rejection information on the display unit 150.

If the call rejection message menu is not selected or if the call rejection message is not selected after the call rejection message menu is selected, proceeding to operation 515, the electronic device determines whether the call reception is finished during the call.

If the call reception is not finished during the call, returning to operation 505, the electronic device continues to display information on the received call on the display unit 150 as illustrated in FIG. 9A. If the call rejection message is not selected in a state in which the call rejection message menu is selected, the electronic device may continue to display the call rejection message selection screen as illustrated in FIG. 9B.

If the call reception is finished, proceeding to operation 517, the electronic device displays a missed call icon on the display unit 150. For example, the electronic device displays missed call icons 927 and 929 on the display unit 150 as illustrated in FIG. 9D.

After displaying the missed call icon, proceeding to operation 511, the electronic device confirms whether the call is finished. After the call is finished, if the user selects the missed call icon 927 displayed on the display unit 150, as illustrated in FIG. 9D, the electronic device may display a cell reception end time 915, a call rejection message transmission time 915, a call sender's name 917, a connection control menu 937 including a "connection" menu 921 for attempting a call connection to the call sender's phone number 919, a "snooze" menu 923 for displaying the call rejection information again after a reference time elapses, and a "close" menu 925 for releasing the display of the call rejection information.

Thereafter, the procedure of FIG. 5 ends.

As described above, the electronic device transmits the rejection message for the received call. In this case, the rejection message is configured either in text form or in voice form. For one example, if the rejection message is configured in text form, the electronic device transmits the rejection message to the call sender by using a short message service.

For another example, if the rejection message is configured in voice form, the electronic device may temporarily connect a call to the call sender to transmit a voice message for the rejection. When transmission of the voice message is complete, the call connection to the call sender is finished.

For another example, if the rejection message is configured in voice form, the electronic device may transmit a voice message for the rejection through an additional control channel in addition to the call connection.

For another example, the electronic device may transmit index information for rejection message transmission to an additional server. In this case, the rejection message configured with at least one of a voice or a text corresponding to the index information is transmitted to the call sender.

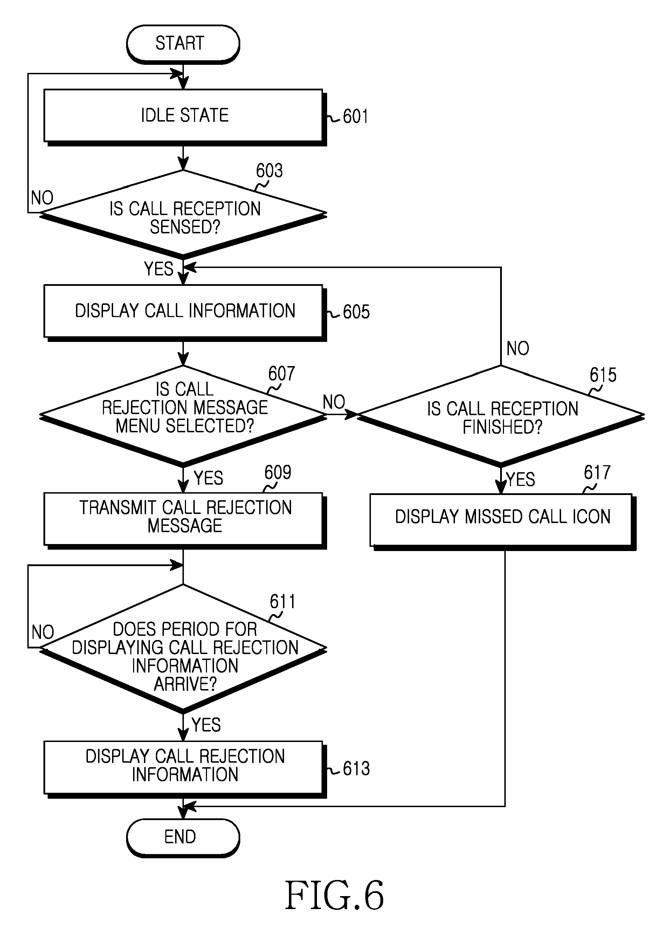

FIG. 6 is a flowchart illustrating a process for periodically displaying call rejection information in an electronic device in an idle state according to an embodiment of the present disclosure.

Referring to FIG. 6, the electronic device is in an idle state in operation 601, and determines whether call reception is sensed via the communication unit 170 in operation 603.

Upon sensing the call reception, proceeding to operation 605, the electronic device displays information on the reception-sensed call on the display unit 150. For example, the electronic device displays a sender's name 901 and a sender's phone number 903 on the display unit 150 as illustrated in FIG. 9A. If a phone number of the reception-sensed call is not stored in a phonebook, the electronic device may display only the phone number and not the name.

After displaying information on the call on the display unit 150, proceeding to operation 607, the electronic device determines whether a call rejection message menu is selected. For example, as illustrated in FIG. 9A, the electronic device determines whether the call rejection message menu 905 is selected by a user's manipulation in a screen which displays the reception-sensed call. Herein, when a user of the electronic device cannot immediately respond to the reception-sensed call, the call rejection message indicates a means capable of reporting to the call sender that the call cannot be immediately responded.

If the call rejection message menu is selected, proceeding to operation 609, the electronic device transmits any one message selected by the user from the call rejection messages. For example, as illustrated in FIG. 9B, if a message 911 saying "I'm in a meeting right now. I will call you later." is selected by the user, the electronic device transmits the message 911 saying "I'm in a meeting right now. I will call you later." to a phone number included in the received call information (see 909). In this case, the electronic device ends the call reception. In addition, if the call rejection message menu is selected, the electronic device may transmit a pre-set rejection message.

After transmitting the call rejection message, proceeding to operation 611, the electronic device determines whether a period for displaying call rejection information arrives. Herein, the period for displaying the call rejection information includes at least one of a period which is pre-set by a system or a period which is set by the user.

At the arrival of the period for displaying the call information and the call rejection message, proceeding to operation 613, the electronic device displays the call rejection information on the display unit 150. For example, as illustrated in FIG. 9C, the electronic device displays call rejection information 935 on the display unit 150. The call rejection information 935 includes a part 913 of the call rejection message transmitted to a call sender, a call rejection message transmission time 915, a call sender's name 917, a call sender's phone number 919, and a call reception count 931. In addition, as illustrated in FIG. 9C, the electronic device may display a connection control menu 937 including a "connection" menu 921 for attempting a call connection to the call sender's phone number 919, a "snooze" menu 923 for displaying the call rejection information again after a reference time elapses, and a "close" menu 925 for releasing the display of the call rejection information. In this case, the electronic device may generate vibration and sound while displaying the call rejection information on the display unit 150.

If the call rejection message menu is not selected or if the call rejection message is not selected after the call rejection message menu is selected, proceeding to operation 615, the electronic device determines whether the call reception is finished.

If the call reception is not finished, returning to operation 605, the electronic device continues to display information on the received call on the display unit 150 as illustrated in FIG. 9A. If the call rejection message is not selected in a state in which the call rejection message menu is selected, the electronic device may continue to display the call rejection message selection screen as illustrated in FIG. 9B.

If the call reception is finished, proceeding to operation 617, the electronic device displays a missed call icon on the display unit 150. For example, the electronic device displays missed call icons 927 and 929 on the display unit 150 as illustrated in FIG. 9D. In this case, if it is sensed that the user selects the missed call icon 927 displayed on the display unit 150, as illustrated in FIG. 9D, the electronic device may display a cell reception end time 915, a call rejection message transmission time 915, a call sender's name 917, a connection control menu 937 including a "connection" menu 921 for attempting a call connection to the call sender's phone number 919, a "snooze" menu 923 for displaying the call rejection information again after a reference time elapses, and a "close" menu 925 for releasing the display of the call rejection information.

Thereafter, the procedure of FIG. 6 ends.

As described above, the electronic device transmits the rejection message for the received call. In this case, the rejection message is configured either in text form or in voice form. For example, if the rejection message is configured in text form, the electronic device transmits the rejection message to the call sender by using a short message service.

For another example, if the rejection message is configured in voice form, the electronic device may temporarily connect a call to the call sender to transmit a voice message for the rejection. When transmission of the voice message is complete, the call connection to the call sender is finished.

For another example, if the rejection message is configured in voice form, the electronic device may transmit a voice message for the rejection through an additional control channel in addition to the call connection.

For another example, the electronic device may transmit index information for rejection message transmission to an additional server. In this case, the rejection message configured with at least one of a voice or a text corresponding to the index information is transmitted to the call sender.

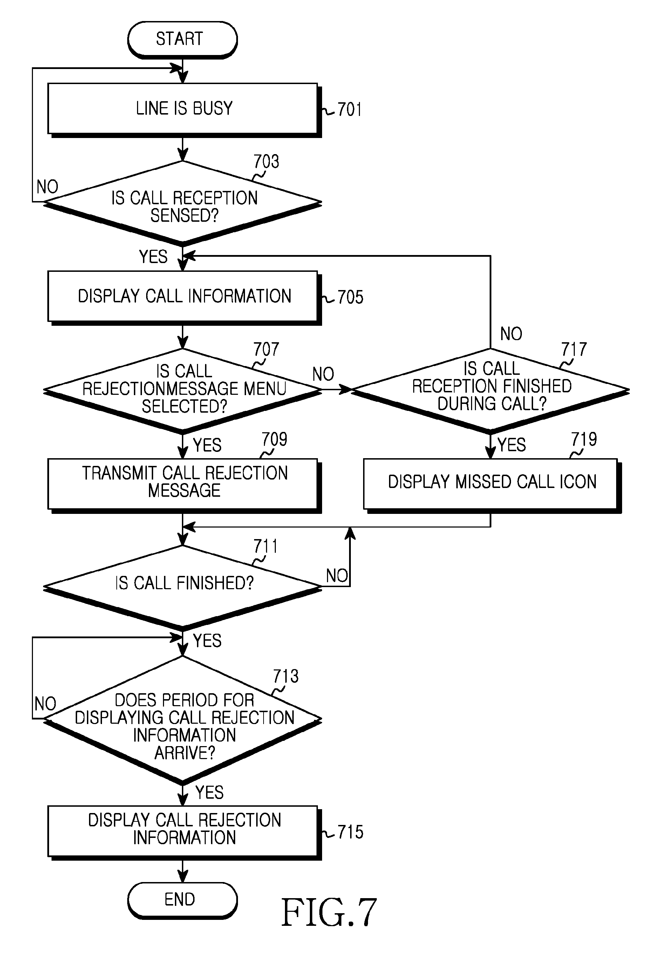

FIG. 7 is a flowchart illustrating a process for periodically displaying call rejection information in an electronic device during a call according to an embodiment of the present disclosure.

Referring to FIG. 7, while the line is busy in operation 701, the electronic device determines whether cell reception is sensed in operation 703.

Upon sensing the call reception, proceeding to operation 707, the electronic device displays information on the reception-sensed call on the display unit 150. For example, the electronic device displays a sender's name 901 and a sender's phone number 903 on the display unit 150 as illustrated in FIG. 9A. If a phone number of the reception-sensed call is not stored in a phonebook, the electronic device may display only the phone number and not the name.

After displaying information on the call on the display unit 150, proceeding to operation 707, the electronic device determines whether a call rejection message menu is selected. For example, as illustrated in FIG. 9A, the electronic device determines whether the call rejection message menu 905 is selected by a user's manipulation in a screen which displays the reception-sensed call. Herein, when a user of the electronic device cannot immediately respond to the reception-sensed call, the call rejection message indicates a means capable of reporting to the call sender that the call cannot be immediately responded.

If the call rejection message menu is selected, proceeding to operation 709, the electronic device transmits any one message selected by the user from the call rejection messages. For example, as illustrated in FIG. 9B, if a message 911 saying "I'm in a meeting right now. I will call you later." is selected by the user, the electronic device transmits the message 911 saying "I'm in a meeting right now. I will call you later." to a phone number included in the received call information (see 909). In this case, the electronic device ends the call reception. In addition, if the call rejection message menu is selected, the electronic device may transmit a pre-set rejection message.

After transmitting the call rejection message, proceeding to operation 711, the electronic device determines whether the call is finished.

If the call is finished, proceeding to operation 713, the electronic device determines whether a period for displaying call rejection information arrives. Herein, the period for displaying the call rejection information includes at least one of a period which is pre-set by a system or a period which is set by the user.

At the arrival of the period for displaying the call information and the call rejection message, proceeding to operation 715, the electronic device displays the received call information and the transmitted call rejection message on the display unit 150. For example, as illustrated in FIG. 9C, the electronic device displays call rejection information 935 on the display unit 150. The call rejection information 935 includes a part 913 of the call rejection message transmitted to a call sender, a call rejection message transmission time 915, a call sender's name 917, a call sender's phone number 919, and a call reception count 931. In addition, as illustrated in FIG. 9C, the electronic device may display a connection control menu 937 including a "connection" menu 921 for attempting a call connection to the call sender's phone number 919, a "snooze" menu 923 for displaying the call rejection information again after a reference time elapses, and a "close" menu 925 for releasing the display of the call rejection information. In this case, the electronic device may generate vibration and sound while displaying the call rejection information on the display unit 150.

If the call rejection message menu is not selected or if the call rejection message is not selected after the call rejection message menu is selected, proceeding to operation 717, the electronic device determines whether the call reception is finished during the call.

If the call reception is not finished during the call, returning to operation 705, the electronic device continues to display information on the received call on the display unit 150 as illustrated in FIG. 9A. If the call rejection message is not selected in a state in which the call rejection message menu is selected, the electronic device may continue to display the call rejection message selection screen as illustrated in FIG. 9B.

If the call reception is finished, proceeding to operation 719, the electronic device displays a missed call icon on the display unit 150. For example, the electronic device displays missed call icons 927 and 929 on the display unit 150 as illustrated in FIG. 9D.

After displaying the missed call icon, proceeding to operation 711, the electronic device confirms whether the call is finished. After the call is finished, if the user selects the missed call icon 927 displayed on the display unit 150, as illustrated in FIG. 9D, the electronic device may display a cell reception end time 915, a call rejection message transmission time 915, a call sender's name 917, a connection control menu 937 including a "connection" menu 921 for attempting a call connection to the call sender's phone number 919, a "snooze" menu 923 for displaying the call rejection information again after a reference time elapses, and a "close" menu 925 for releasing the display of the call rejection information.

Thereafter, the procedure of FIG. 7 ends.

As described above, the electronic device transmits the rejection message for the received call. In this case, the rejection message is configured either in text form or in voice form. For example, if the rejection message is configured in text form, the electronic device transmits the rejection message to the call sender by using a short message service.

For another example, if the rejection message is configured in voice form, the electronic device may temporarily connect a call to the call sender to transmit a voice message for the rejection. When transmission of the voice message is complete, the call connection to the call sender is finished.

For another example, if the rejection message is configured in voice form, the electronic device may transmit a voice message for the rejection through an additional control channel in addition to the call connection.

For another example, the electronic device may transmit index information for rejection message transmission to an additional server. In this case, the rejection message configured with at least one of a voice or a text corresponding to the index information is transmitted to the call sender.

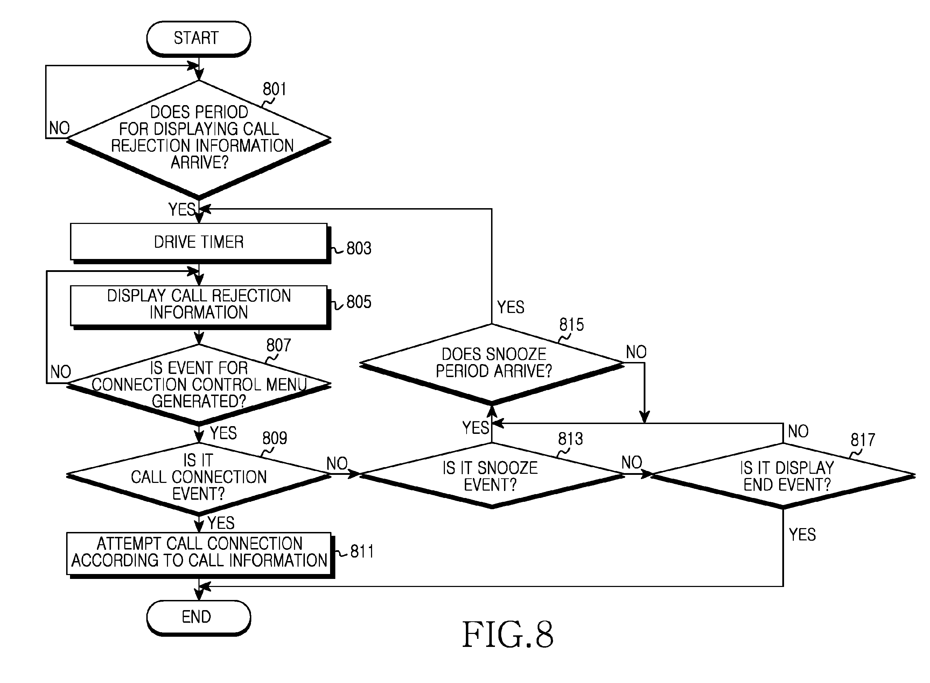

FIG. 8 is a flowchart illustrating a process for performing an event by using call rejection information in an electronic device according to an embodiment of the present disclosure.

Referring to FIG. 8, the electronic device determines whether a period for displaying call rejection information arrives in operation 801. Herein, the period for displaying the call rejection information includes at least one of a period which is pre-set by a system or a period which is set by the user.

At the arrival of the period for displaying the call rejection information, proceeding to operation 803, the electronic device drives a timer for determining a display duration time of the call rejection information. Herein, the display duration time of the call rejection information may be pre-set by a system or may be set by a user.

After driving the timer, proceeding to operation 805, the electronic device displays call rejection information on the display unit 150. For example, as illustrated in FIG. 9C, the electronic device displays call rejection information 935 on the display unit 150. The call rejection information 935 includes a part 913 of the call rejection message transmitted to a call sender, a call rejection message transmission time 915, a call sender's name 917, a call sender's phone number 919, and a call reception count 931. In addition, as illustrated in FIG. 9C, the electronic device may display a connection control menu 937 including a "connection" menu 921 for attempting a call connection to the call sender's phone number 919, a "snooze" menu 923 for displaying the call rejection information again after a reference time elapses, and a "close" menu 925 for releasing the display of the call rejection information. In this case, the electronic device may generate vibration and sound while displaying the call rejection information on the display unit 150.

After displaying the call rejection information on the display unit 150, proceeding to operation 807, the electronic device determines whether an event for the connection control menu is generated. For example, as illustrated in FIG. 9C, the electronic device determines whether at least one of the "connection" menu 921, the "snooze" menu 923, and the "close" menu 925 is selected from the connection control menu 937 including these menus.

At the occurrence of the event for the connection control menu, proceeding to operation 809, the electronic device determines whether it is the call connection event. For example, as illustrated in FIG. 9C, the electronic device determines whether the "connection" menu 921 is selected for attempting a call connection to the call sender's phone number 919.

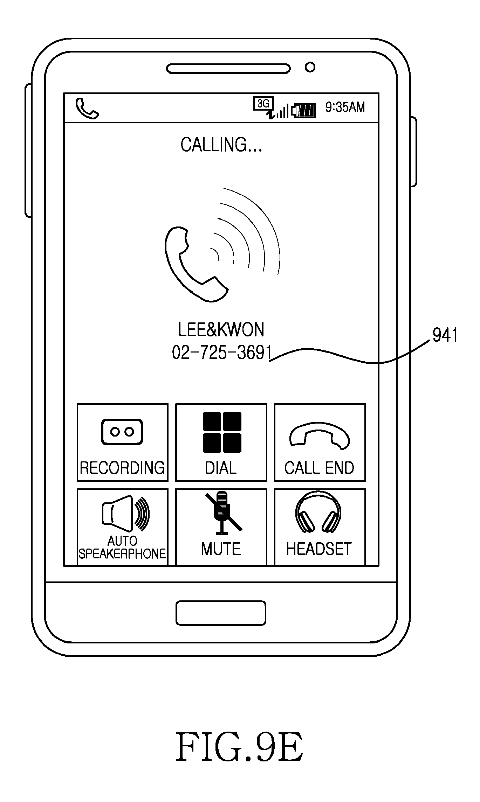

If it is the call connection event, proceeding to operation 811, the electronic device attempts a call connection according to the call information. For example, as illustrated in FIG. 9E, the call connection is attempted to the phone number 941 which is the same as the phone number 919 of the call sender illustrated in FIG. 9C. In this case, the electronic device recognizes that the call rejection information is no longer displayed.

Otherwise, if it is not the call connection event, proceeding to operation 813, the electronic device determines whether it is a snooze event. For example, as illustrated in FIG. 9C, the electronic device determines whether the "snooze" menu 923 is selected for displaying the call rejection information again after a reference time elapses. Herein, the snooze is for periodically displaying the call rejection information again if the display of the call rejection information is released by the timer, and a period of the snooze may be pre-set by a system or may be set by a user.

If it is the snooze event, proceeding to operation 815, the electronic device determines whether the snooze period arrives.

At the arrival of the snooze period, returning to operation 803, the electronic device drives the timer.

Otherwise, if it is not the snooze event, proceeding to operation 817, the electronic device determines whether it is the display end event for the call rejection information. For example, as illustrated in FIG. 9C, the electronic device may display the "close" menu 925 for releasing the display of the call rejection information.

Thereafter, the procedure of FIG. 9 ends.

In the aforementioned embodiment, the electronic device displays call rejection information for a call which transmits a call rejection message.

In another embodiment, the electronic device may transmit the call rejection message even if call connection is performed. In this case, the electronic device may display call rejection information.

As described above, since the electronic device displays the reception-rejected call information and the rejection message, the user of the electronic device can easily recognize the reception-rejected call.

In addition, since the electronic device adds the call connection menu to the reception-rejected call information and the rejection message displayed on the display unit, there is an advantage in that the user of the electronic device can easily perform call connection for the reception-rejected call.

While the present disclosure has been particularly shown and described with reference to exemplary embodiments thereof, it will be understood by those skilled in the art that various changes in form and details may be made therein without departing from the spirit and scope of the present disclosure as defined by the appended claims.

## Claims

1. A method of handling a reception call in an electronic device, the method comprising:
transmitting a rejection message for call reception; and
displaying call rejection information for the call reception,
wherein the call rejection information comprises at least one of reception-rejected call information and the rejection message.

2. The method of claim 1, further comprising:
receiving a call;
displaying information on the call reception; and
confirming whether the call reception is rejected,
wherein if it is confirmed that the call reception is rejected, a rejection message for the received call is transmitted.

3. The method of claim 1, wherein the transmitting of the rejection message comprises:
confirming the rejection message; and
transmitting the rejection message to a call sender.

4. The method of claim 1, wherein the transmitting of the rejection message comprises:
displaying a plurality of rejection messages; and
if any one of the plurality of rejection messages is selected, transmitting the selected rejection message to a call sender.

5. The method of claim 1, wherein the displaying of the call rejection information comprises:
after transmitting the rejection message for the call reception, determining whether a period for displaying the call rejection information arrives; and
at the arrival of the period for displaying the call rejection information, displaying the call rejection information.

6. The method of claim 1, wherein the displaying of the call rejection information comprises:
during a call to a first recipient, determining whether the call to the first recipient is finished; and
if the call to the first recipient is finished, displaying the call rejection information.

7. The method of claim 1, further comprising:
after transmitting the rejection message for the call reception, if a reference time elapses, releasing the display of the call rejection information; and
at the arrival of a period for displaying the call rejection information, displaying the call rejection information.

8. The method of claim 1, further comprising, after transmitting the rejection message for the call reception, generating at least one of vibration and sound to report the call rejection information.

9. The method of claim 1, wherein the call rejection information further includes a call connection icon.

10. The method of claim 9, further comprising:
if the call connection icon is selected, confirming a call sender included in the call rejection information; and
performing call connection to the call sender.

11. An electronic device comprising a processor unit to perform the method of any one of claims 1 to 10.

12. A computer program comprising computer program code means adapted to perform all the steps of any one of the method claims 1 to 10 when the computer program is run on a processor.
